# EUROPEAN PATENT SPECIFICATION

(11) **EP 1 099 916 B1**
(45) Date of publication and mention of the grant of the patent: **11.01.2006**
(21) Application number: 00309446.3
(22) Date of filing: 26.10.2000
(51) Int. Cl.: F24H 8/00

(54) **Combustion device**
Verbrennungsgerät
Appareil de combustion

(30) Priority: 12.11.1999 JP 32285299
(43) Date of publication of application: 16.05.2001
(73) Proprietor: RINNAI KABUSHIKI KAISHA, Nagoya-shi, Aichi-ken (JP)
(72) Inventor: Takeuchi, Shigeki, Rinnai KK, Nagoya-shi, Aichi-ken (JP); Mori, Kinji, Rinnai KK, Nagoya-shi, Aichi-ken (JP); Okada, Sadao, Rinnai KK, Nagoya-shi, Aichi-ken (JP); Tajima, Naoki, Rinnai KK, Nagoya-shi, Aichi-ken (JP)
(74) Representative: Fenlon, Christine Lesley

(56) References cited:
- EP-A- 1 063 480
- DE-A- 3 151 418
- DE-A- 4 240 428
- US-A- 4 478 158
- PATENT ABSTRACTS OF JAPAN vol. 1996, no. 11, 29 November 1996 (1996-11-29) & JP 08 173977 A (TOKYO GAS CO LTD), 9 July 1996 (1996-07-09)

## Description

### BACKGROUND OF THE INVENTION

### Field of the Invention:

The present invention relates to a combustion device such as a hot water supply device or the like, and more particularly to a combustion device for neutralizing, with tap water, an acid drain that is produced from a heat exchanger by a heat exchange with an exhaust gas produced by the combustion of a fuel in a burner.

### Description of the Related Art:

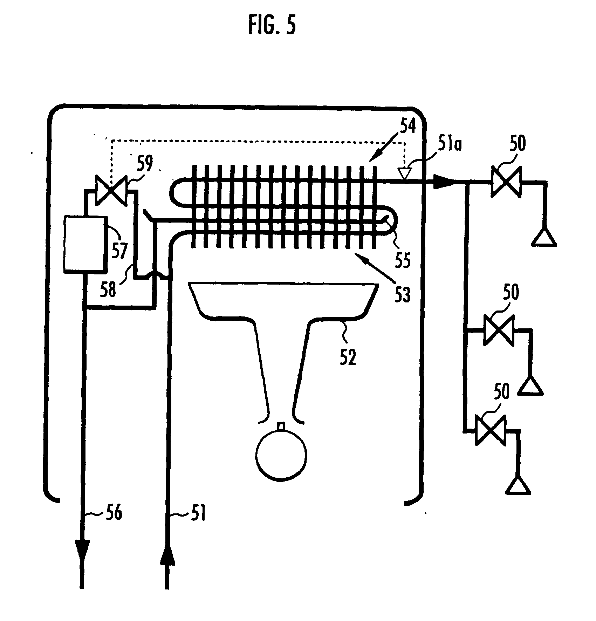

One example of combustion devices is a hot water supply device as disclosed in Japanese laid-open utility model publication No. 5-19703, for example. As disclosed in FIG. 5 of the accompanying drawings, the disclosed hot water supply device comprises a water passage 51 having faucets 50 on ends thereof, a water flow switch 51a for detecting a water flow through the water passage 51, a burner 52, a sensible heat exchanger 53, a latent heat exchanger 54, a receptacle 55 disposed below the latent heat exchanger 54 for collecting water condensed in the latent heat exchanger 54, a drain passage 56 for discharging the collected water as a drain, a branch passage 58 branched from the water passage 51 upstream of the sensible heat exchanger 53 and joined to a tank 57 connected to the drain passage 56, and an on-off valve 59 for selectively opening and closing the branch passage 58.

Water flowing through the water passage 51 is gradually heated by the heat of the exhaust gas from the burner 52 as it passes successively through the sensible heat exchanger 53 and the latent heat exchanger 54. The heated water is supplied to the faucets 50. The water that flows through the water passage 51 is primarily heated in the sensible heat exchanger 53. After the water is heated by the sensible heat exchanger 53, it is further heated in the latent heat exchanger 54 by the exhaust gas whose temperature has been dropped by the heat exchange in the sensible heat exchanger 53. Since the water that flows through the water passage 51 is heated in two stages, i.e., successively by the sensible heat exchanger 53 and the latent heat exchanger 54, the thermal efficiency of the exhaust gas is increased.

Water vapour contained in the exhaust gas is condensed in the latent heat exchanger 54 because the water vapour is deprived of latent heat. The condensed water is collected by the receptacle 55, and discharged as a drain via the drain passage 56 from the hot water supply device. Since the drain contains nitric acid (HNO₃) and sulfuric acid (H₂SO₄) by absorbing nitrogen oxides (NOx) and sulfur oxides (SOx) from the exhaust gas, the drain has an acidity of about pH 4. If the drain is discharged as it is without being neutralized, then it tends to corrode the metal components used as the drain passage 56 and associated parts, deteriorate surrounding concrete structures, and contaminating water, causing environmental pollution. It is therefore necessary to neutralize the drain so that the pH thereof will be in the range of 5 to 9 as provided for according to the drain standards.

To meet such a requirement, when the hot water supply device supplies hot water, the on-off valve 59 is opened in response to a signal from the water flow switch 51a. When the on-off valve 59 is opened, a portion of tap water from the water passage 51 flows through the branch passage 58 and the tank 57 and is mixed with the drain flowing through the drain passage 56, thus neutralizing the drain to bring its pH into the range of 5 to 9. The drain thus neutralized is discharged from the drain passage 56. The term "neutralization" used herein covers mixing an alkaline solution with the drain to bring its pH into the range according to the drain standards, and also diluting the drain with water to bring its pH into the range according to the drain standards.

However, even when the burner 52 burns the fuel at a constant rate and the drain is produced in a constant quantity, the amount of tap water flowing through the branch passage 58 may possibly change and become excessive. For example, though it is sufficient to mix a constant amount of tap water with the drain when the drain is produced in a constant quantity, the amount of water flowing through the branch passage 58 increases if the pressure of water in the water passage 51 rises. When the amount of water flowing through the branch passage 58 increases, the drain is mixed with a greater amount of water than necessary via the on-off valve 59.

A previously considered combustion device having a manually adjustable valve is described in DE4240418.

According to the present invention, a combustion device comprising: a burner for combusting a fuel; a water passage for passing tap water therethrough; a heat exchanger for increasing the temperature of tap water in said water passage due to a heat exchange with an exhaust gas produced by said burner upon combustion of the fuel; a drain passage for discharging a drain produced when water vapor contained in the exhaust gas is condensed in said heat exchanger; a branch passage from the water passage for feeding tap water to neutralize the drain; an on-off valve for selectively opening and closing the branch passage; an on-off valve control means for controlling the opening and closing of said on-off valve when the fuel is combusted by said valve when the fuel is combusted by said burner, wherein the on-off valve control means comprises amount-of-combusted gas measuring means for measuring an amount of gas combusted by said burner per unit time; and valve-opening-time control means for controlling a time for which said on-off valve is opened depending on the amount of gas combusted by said burner which is measured by said amount-of-combusted-gas measuring means; characterised by the provision of a controller for controlling the amount of fuel supplied to the burner for combustion according to the rate of flow of tap water in the water passage as measured by a flow meter; and a constant-rate valve connected to said branch passage having a valve element for controlling the flow of water through the valve according to the pressure of the tap water, in order to maintain a substantially constant rate of flow of water in said branch passage.

Even if the pressure of water in the branch passage increases due to a pressure buildup in the water passage, the rate of flow of water in the branch passage does not increase, but is maintained at a constant level. As a result, when the pressure of water in the water passage rises, a greater amount of tap water than necessary to neutralize the drain is prevented from being mixed with the drain.

The on-off valve control means may comprise amount-of-combusted-gas measuring means for measuring an amount of gas combusted by the burner per unit time, and valve-opening-time control means for controlling a time for which the on-off valve is opened depending on the amount of gas combusted by the burner which is measured by the amount-of-combusted-gas measuring means.

The on-off valve control means may further comprise calculating means for calculating an amount of produced drain based on the amount of gas combusted by the burner which is measured by the amount-of-combusted-gas measuring means, calculating an amount of tap water to be mixed with the drain in order to bring the pH of the drain into a range of 5 to 9, based on the calculated amount of produced drain, and calculating a time for which the on-off valve is opened based on the calculated amount of tap water.

When the amount of gas combusted by the burner increases, the on-off valve control means extends the time for which the on-off valve is opened, and when the amount of gas combusted by the burner decreases, the on-off valve control means shortens the time for which the on-off valve is opened. In this manner, the amount of tap water supplied via the branch passage and mixed with the drain increases or decreases. The constant-rate valve is effective to prevent the rate of flow of water in the branch passage from being varied regardless of changes in the pressure of water in the water passage. Consequently, the ratio of the amount of tap water mixed with the produced drain to the amount of the produced drain is maintained at a substantially constant level.

The above and other features and advantages of the present invention will become apparent from the following description when taken in conjunction with the accompanying drawings which illustrate a preferred embodiment of the present invention by way of example.

### BRIEF DESCRIPTION OF THE DRAWINGS

FIG. 1 is a schematic cross-sectional view, partly in block form, of a hot water supply device as a combustion device according to the present invention;
FIG. 2 is a cross-sectional view of a constant-rate valve used in the hot water supply device shown in FIG. 1;
FIG. 3 is a diagram showing the relationship between the amount Q of a produced drain, the time t for which an on-off valve is opened, and the amount P of a fuel combusted by a burner;
FIG. 4 is a flowchart of an operation sequence of the combustion device according to the present invention; and
FIG. 5 is a schematic cross-sectional view of a conventional hot water supply device as a combustion device.

### DETAILED DESCRIPTION OF THE PREFERRED EMBODIMENT

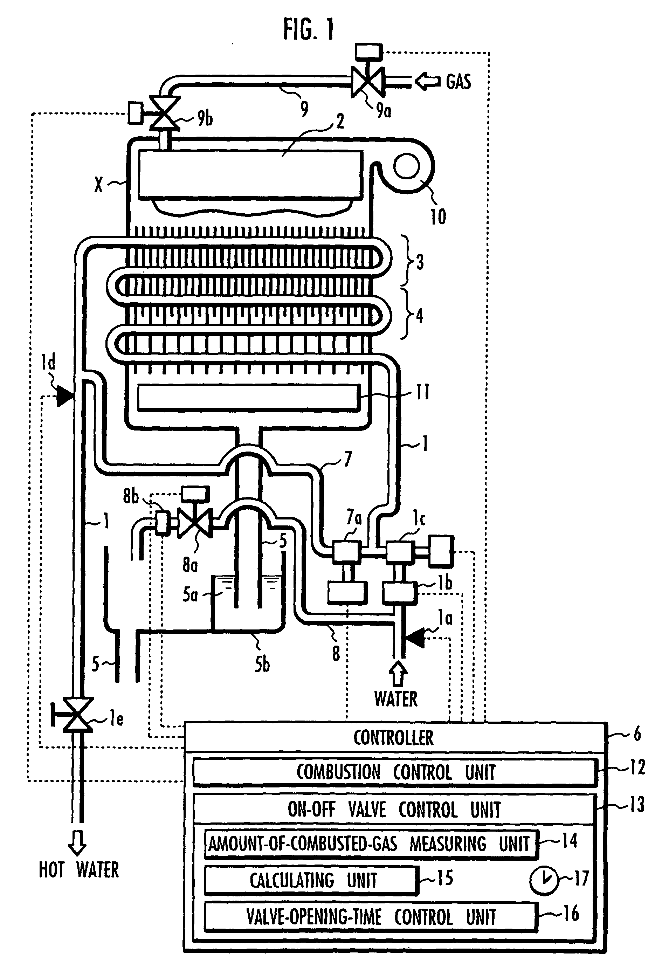

As shown in FIG. 1, a hot water supply device as a combustion device according to the present invention has a water passage 1 extending through a combustion chamber x, a burner 2 disposed in the combustion chamber x for combusting a fuel such as a gas, a sensible heat exchanger 3 disposed below the burner 2 in the combustion chamber x, and a latent heat exchanger 4 disposed below the sensible heat exchanger 3 in the combustion chamber x. The hot water supply device also has a drain passage 5 for collecting and discharging water (drain) condensed in the latent heat exchanger 4 and dropped onto a bottom wall of the combustion chamber x, and a controller 6 for controlling operation of the hot water supply device. The drain passage 5 includes a primary tank 5a for holding the drain, and a secondary tank 5b for receiving a drain overflow from the primary tank 5a.

The water passage 1 extends through the latent heat exchanger 4 and the sensible heat exchanger 3 such that water flowing through the water passage 1 first passes through the latent heat exchanger 4 and then passes through the sensible heat exchanger 3. A bypass passage 7 is branched from the water passage 1 upstream of the latent heat exchanger 4 and joined to the water passage 1 downstream of the sensible heat exchanger 3, in bypassing relation to the combustion chamber x. The bypass passage 7 has a bypass flow regulating valve 7a for regulating the rate of flow of water in the bypass passage 7. A branch passage 8 is branched from the water passage 1 upstream of the bypass passage 7, and extends into the secondary tank 5b of the drain passage 5 for supplying water from the water passage 1 to the secondary tank 5b. The branch passage 8 has an on-off valve 8a and a constant-rate valve 8b for keeping the rate of flow at a constant level irrespective of changes in the pressure of water in the branch passage 8. The water passage 1 is associated with an incoming water temperature sensor 1a positioned upstream of the point where the branch passage 8 is branched from the water passage 1, a flow meter 1b positioned near the point where the bypass passage 7 is branched from the water passage 1, a main flow regulating valve 1c disposed upstream of the point where the bypass passage 7 is branched from the water passage 1 and downstream of the point where the branch passage 8 is branched from the water passage 1, an outgoing water temperature sensor 1d positioned downstream of the sensible heat exchanger 3, and a faucet 1e connected to a downstream end of the water passage 1.

To the burner 2, there is connected a gas supply passage 9 which has a main solenoid-operated valve 9a for selectively opening and closing the gas supply passage 9, and a gas regulating valve 9b for regulating the rate of flow of a gas supplied to the burner 2. The combustion chamber x houses therein a combustion fan 10 for supplying combustion air to the burner 2, and has an exhaust port 11 for discharging an exhaust gas produced by the burner 2.

The controller 6 comprises a combustion control unit 12 for controlling the amount of gas combusted by the burner 2, and an on-off valve control unit 13 for controlling the opening and closing of the on-off valve 8a. The on-off valve control unit 13 has an amount-of-combusted-gas measuring unit 14, a calculating unit 15, a valve-opening-time control unit 16, and a timer 17. The amount-of-combusted-gas measuring unit 14 measures the amount of gas combusted by the burner 2 which is controlled by the combustion control unit 12. The calculating unit 15 calculates an amount of produced drain, an amount of tap water to be mixed with the drain, and a time for which the on-off valve 8a is to be opened, i.e., a valve opening time, from the amount of gas measured by the amount-of-combusted-gas measuring unit 14. The valve-opening-time control unit 16 controls a time in which to open the on-off valve 8a based on the valve opening time calculated by the calculating unit 15. The timer 17 controls the opening and closing of the on-off valve 8a based on the time controlled by the valve-opening-time control unit 16.

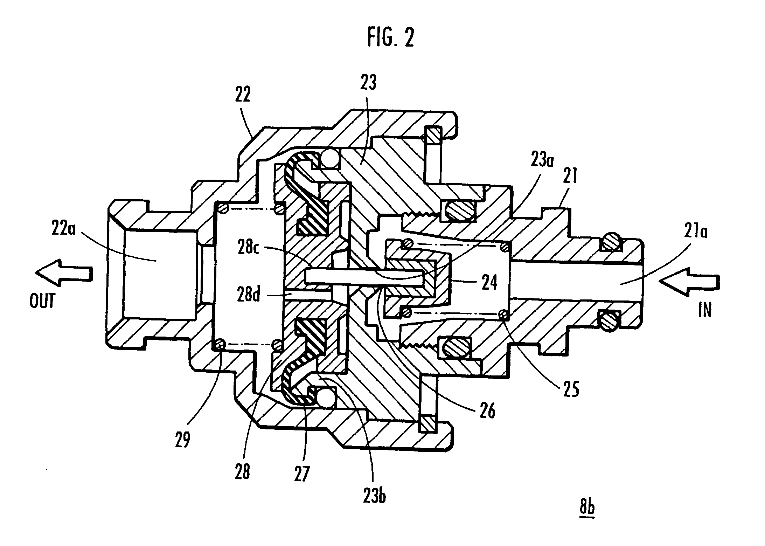

FIG. 2 shows the constant-rate valve 8b in detail. As shown in FIG. 2, the constant-rate valve 8b has a first cylindrical body 21 disposed in an upstream position, i.e., a right position in FIG. 2, and a second cylindrical body 22 disposed in a downstream position. The first cylindrical body 21 and the second cylindrical body 22 are coupled to each other by a substantially disk-shaped intermediate member 23.

The first cylindrical body 21 has an inlet passage 21a defined coaxially therein, and houses a valve element 24 disposed in the inlet passage 21a and a first spring 25 disposed in the inlet passage 21a for normally urging the valve element 24 downstream, i.e., to the left in FIG. 2. A rod valve 26 is mounted on the distal end of the valve element 24 and inserted through a water passageway hole 23a defined centrally in the intermediate member 23 with a clearance around the rod valve 26.

The second cylindrical body 22 has an outlet passage 22a defined coaxially therein, and houses a diaphragm 27 of rubber disposed in the outlet passage 22a, a diaphragm holder 28 disposed in the outlet passage 22a and holding the diaphragm 27, and a second spring 29 disposed in the outlet passage 22a for normally urging the diaphragm holder 28 upstream, i.e., to the right in FIG. 2. The diaphragm 27 has an outer peripheral edge clamped in position between a flange 23b of increased diameter projecting downstream from the intermediate member 23 and the second cylindrical body 22. The diaphragm holder 28 has an insertion hole 28c defined centrally therein which receives a tip end of the rod valve 26, and a through hole 28d defined therein at an off-center position, i.e., radially off the insertion hole 28c.

Water flows downstream into the inlet passage 21a, passes through the clearance around the rod valve 26 in the water passageway hole 23a in the intermediate member 23, then through the through hole 28d in the diaphragm holder 28, and is discharged downstream from the outlet passage 22a.

When the pressure of water flowing into the inlet passage 21a rises, the diaphragm 27 with its outer peripheral edge fixed in position is elastically deformed downstream, displacing the diaphragm holder 28 downstream against the bias of the second spring 29. The valve element 24 moves toward the water passageway hole 23a under the bias of the first spring 25, restricting the rate of flow of water in the clearance around the rod valve 26 in the water passageway hole 23a.

When the pressure of water flowing into the inlet passage 21a then drops, the diaphragm 27 is elastically deformed upstream, and the diaphragm holder 28 moves upstream under the bias of the second spring 29. The valve element 24 also moves upstream away from the water passageway hole 23a against the bias of the first spring 25. Thus, the rate of flow of water in the clearance around the rod valve 26 in the water passageway hole 23a increases.

In this manner, the rate of flow of water in the branch passage 8 can be maintained at a constant level irrespective of changes in the water pressure upstream of the constant-rate valve 8b. In this embodiment, the constant-rate valve 8b is arranged to allow 200 cc of water per 1 minute to flow therethrough in order to adjust the pH of the drain to a reference pH range from 5 to 9 even when the amount of produced drain is maximum.

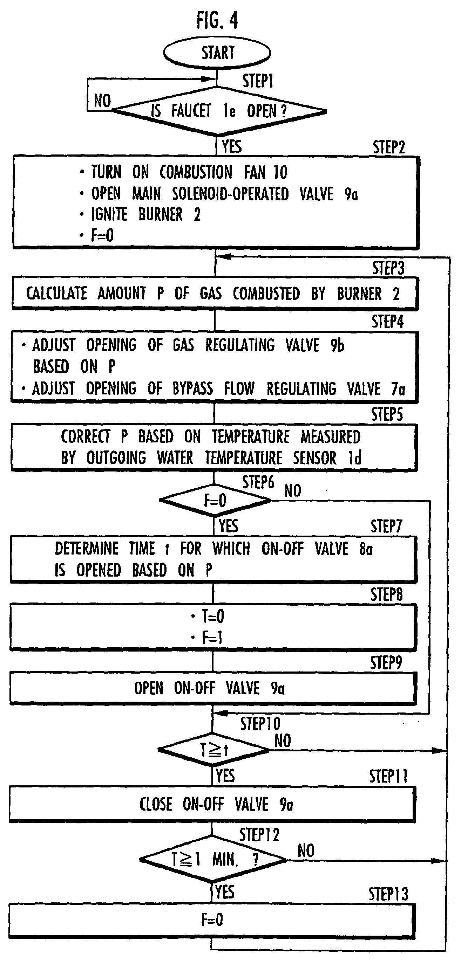

Operation of the hot water supply device will be described below with reference to FIG. 4.

First, the controller 6 determines whether the faucet le is opened or not, or specifically, whether tap water flows at a given rate in the water passage 1 and the flow meter 1b outputs a predetermined flow rate signal or not, in STEP1. If the flow meter 1b outputs a predetermined flow rate signal and hence the faucet 1e is judged as being opened in STEP1 (YES), then the combustion fan 10 is actuated, the main solenoid-operated valve 9a is opened, and an igniter (not shown) is operated to cause the burner 2 to start burning the supplied gas in STEP2. In STEP2, a neutralization flag F indicative of whether the drain is being neutralized or not is set to "0".

The calculating unit 15 calculates an amount P of gas to be combusted by the burner 2 which is required to supply hot water at a temperature preset by a remote control unit (not shown) that is used with the hot water supply device, in STEP3. Specifically, the calculating unit 15 calculates an amount P of gas to be combusted by the burner 2 from the product of a temperature rise, which is represented by the difference between the preset temperature of the hot water and the temperature of incoming water measured by the incoming water temperature sensor 1a, and the rate of flow of water measured by the flow meter 1b.

Then, the combustion control unit 12 adjusts the opening of the gas regulating valve 9b based on the amount P of gas to be combusted by the burner 2 which has been calculated by the calculating unit 15 in STEP4.

The combustion control unit 12 also adjusts the opening of the gas regulating valve 9b to control the amount P of gas combusted by the burner 2 in a feedback loop in order to equalize the temperature of hot water measured by the outgoing water temperature sensor 1d with the temperature preset by the remote control unit, in STEP5.

The controller 6 determines whether the drain is being neutralized or not based on the neutralization flag F in STEP6. If the drain is not being neutralized, i.e., if the neutralization flag F is "0" in STEP6 (YES), then the calculating unit 15 calculates an amount of tap water required to adjust the pH of the drain to a reference pH range from 5 to 9, and a time t for which the on-off valve 8a is opened, i.e., a valve opening time t, per minute required to mix the calculated amount of tap water with the drain, in STEP7.

Then, the controller 6 sets a measured time T of the timer 16 to "0" and also sets the neutralization flag F to "1" in STEP8. Thereafter, the on-off valve 8a is opened in STEP9. If the measured time T of the timer 16 is equal to the valve opening time t in STEP10 (YES), then the on-off valve 8a is closed to interrupt the neutralization of the drain with tap water in STEP11. If the measured time T of the timer 16 reaches 1 minute in STEP12 (YES), then the controller 6 sets the neutralization flag F to "0" in STEP13.

If the faucet le is closed and the flow meter 1b stops outputting a predetermined flow rate signal, the combustion control unit 12 closes the main solenoid-operated valve 9a and turns off the combustion fan 10. Therefore, the combustion in the burner 2 is stopped. However, since a certain amount of drain is continuously produced for a certain period of time after the combustion in the burner 2 is stopped, the on-off valve control unit 13 closes the on-off valve 8a upon elapse of the above certain period of time.

According to the present invention, even if the pressure of water in the water passage 1 varies while the drain is being neutralized by tap water (F = 1) with the on-off valve 8a being open, the rate of flow of water in the branch passage 8 is kept at a constant level by the constant-rate valve 8b. Therefore, the rate of tap water supplied from the branch passage 8 to the secondary tank 5b until the measured time T of the timer 17 reaches the valve opening time t is prevented from varying due to changes in the pressure of water in the water passage 1. Consequently, even if the pressure of water in the branch passage 8 increases due to a pressure buildup in the water passage 1, the rate of flow of water in the branch passage 8 does not increase, but is maintained at a constant level. As a result, when the pressure of water in the water passage 1 rises, a greater amount of tap water than necessary to neutralize the drain is prevented from being mixed with the drain.

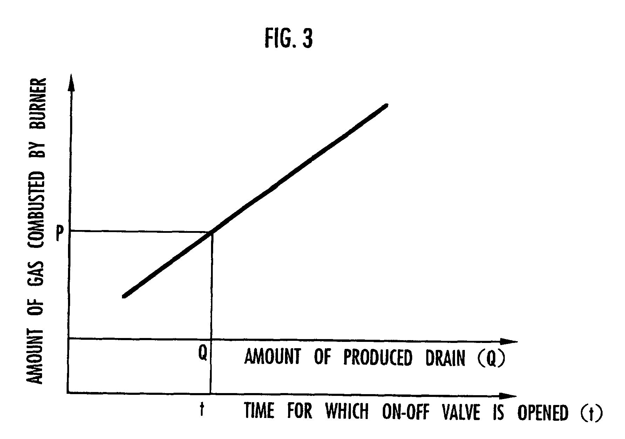

When the drain is being neutralized, i.e., when the neutralization flag F is "1", and the on-off valve 8a is open, if the temperature preset by the remote control unit for the hot water is changed to a different setting, then the amount P of gas combusted by the burner 2 is changed (see STEP3). At this time, the amount Q of the produced drain is also changed. However, the valve opening time t is also changed based on the changed amount P of gas combusted by the burner 2 as shown in FIG. 3 (see STEP7). Therefore, the drain whose amount is changed is mixed with an amount of tap water that is suitable for neutralizing the drain.

Consequently, irrespective of changes in the pressure of water in the water passage 1 and changes in the amount P of gas combusted by the burner 2, the ratio of the amount of tap water mixed with the produced drain to the amount of the produced drain is maintained at a substantially constant level. If the pH of the drain needs to be kept closely to a certain value, e.g., "7", under some severe conditions, then the hot water supply device according to the present invention is capable of keeping the pH of the drain at the above certain value.

The above embodiment of the present invention has been described as being applied to the neutralization of a drain discharged from a hot water supply device. However, the principles of the present invention are also applicable to the neutralization of a drain discharged from any of various combustion devices such as a heating boiler, which produce an acid drain from a heat exchanger due to the combustion of a fuel in a burner. While the fuel combusted by the burner 2 is a gas in the illustrated embodiment, it may be any fuel such as light oil or the like insofar as the produced drain is acid.

Although a certain preferred embodiment of the present invention has been shown and described in detail, it should be understood that various changes and modifications may be made therein without departing from the scope of the appended claims.

## Claims

1. A combustion device comprising:
a burner (2) for combusting a fuel;
a water passage (1) for passing tap water therethrough;
a heat exchanger (3,4) for increasing the temperature of tap water in said water passage (1) due to a heat exchange with an exhaust gas produced by said burner upon combustion of the fuel;
a drain passage (5) for discharging a drain produced when water vapor contained in the exhaust gas is condensed in said heat exchanger (3,4);
a branch passage (8) from the water passage (1) for feeding tap water to neutralize the drain;
an on-off valve (8a) for selectively opening and closing the branch passage (8);
an on-off valve control means (6) for controlling the opening and closing of said on-off valve (8a) when the fuel is combusted by said burner, **characterised by** the on-off valve control means (6) comprising amount-of-combusted gas measuring means (14) for measuring an amount of gas combusted by said burner per unit time; and valve-opening-time control means (16) for controlling a time for which said on-off valve (8a) is opened depending on the amount of gas combusted by said burner which is measured by said amount-of-combusted-gas measuring means (14);
and a controller (6,12,15) for controlling the amount of fuel supplied to the burner for combustion according to the rate of flow of tap water in the water passage as measured by a flow meter (1b); and
a constant-rate valve (8b) connected to said branch passage (8) having a valve element (24) for controlling the flow of water through the valve according to the pressure of the tap water, in order to maintain a substantially constant rate of flow of water in said branch passage (8).

2. A combustion device according to claim 1, wherein said on-off valve control means (6) further comprises:
calculating means (15) for calculating an amount of produced drain based on the amount of gas combusted by said burner which is measured by said amount-of-combusted gas measuring means (14), calculating an amount of tap water to be mixed with the drain in order to bring the pH of the drain into a range of 5 to 9, based on the calculated amount of produced drain, and calculating a time for which said on-off valve (8a) is opened based on the calculated amount of tap water.

## Patentansprüche

1. Verbrennungsgerät, aufweisend:
einen Brenner (2) zum Verbrennen eines Brennstoffes;
eine Wasserleitung (1) zum Leiten von Leitungswasser;
einen Wärmetauscher (3, 4) zum Erhöhen der Temperatur des Leitungswassers in der Wasserleitung (1) aufgrund eines Wärmetausches mit einem Abgas, das von dem Brenner beim Verbrennen des Brennstoffs erzeugt wird,
eine Ablaufleitung (5) zum Ableiten eines Abwassers, das erzeugt wird, wenn der im Abgas enthaltende Wasserdampf im Wärmetauscher (3, 4) kondensiert wird;
eine Abzweigungsleitung (8) von der Wasserleitung (1) zum Einspeisen von Leitungswasser, um das Abwasser zu neutralisieren;
ein Zweipunktventil (8a) zum selektiven Öffnen und Schließen der Abzweigungsleitung (8);
ein Zweipunktventil-Steuermittel (6) zum Steuern des Öffnens und Schließens des Zweipunktventils (8a), wenn der Brennstoff durch den Brenner verbrannt wird, **dadurch gekennzeichnet, dass** das Zweipunktventil-Steuermittel (6) Messmittel (14) für die Menge an verbranntem Gas aufweist, um die Menge an Gas zu messen, welche vom Brenner pro Zeiteinheit verbrannt wird; und Ventilöffnungs-Zeitsteuerungsmittel (16) zum Steuern der Zeit, über die das Zweipunktventil (8a) in Abhängigkeit von der Menge an Gas, das von dem Brenner verbrannt wird, geöffnet ist, wobei die Gasmenge durch das Messmittel (14) für die Menge an verbranntem Gas gemessen wird;
und eine Steuerung (6, 12, 15) zum Steuern der Menge an Brennstoff, die dem Brenner für die Verbrennung gemäß der Geschwindigkeit der Strömungsrate des Leitungswassers in der Wasserleitung, gemessen durch ein Strömungsmessgerät (1b), zugeführt wird; und
ein Konstantgeschwindigkeitsventil (8b), das mit der Verzweigungsleitung (8) verbunden ist und ein Ventilelement (24) zum Steuern der Strömung von Wasser durch das Ventil entsprechend dem Druck des Leitungswassers aufweist, um eine im Wesentlichen konstante Strömungsrate von Wasser in der Abzweigungsleitung (8) aufrechtzuerhalten.

2. Verbrennungsvorrichtung nach Anspruch 1, wobei das Zweipunktventil-Steuermittel (6) weiter folgendes aufweist:
Berechnungsmittel (15) zum Berechnen einer Menge an erzeugtem Abwasser basierend auf der Menge an Gas, die durch den Brenner verbrannt wird, welche durch das Messmittel (14) für die Menge an verbranntem Gas gemessen wird, für das Berechnen einer Menge an Leitungswasser, das mit dem Abwasser zu vermischen ist, um den pH-Wert des Abwassers in den Bereich von 5 bis 9 zu bringen, basierend auf der berechneten Menge an erzeugtem Abwasser, und zum Berechnen der Zeit, über die das Zweipunktventil (8a) geöffnet wird, basierend auf der berechneten Menge an Leitungswasser.

## Revendications

1. Appareil de combustion, comprenant :
un brûleur (2) destiné à la combustion d'un combustible ;
un passage d'eau (1) destiné au passage d'eau de robinet ;
un échangeur de chaleur (3, 4) destiné à augmenter la température de l'eau de robinet dans ledit passage d'eau (1) par suite d'un échange de chaleur avec un gaz d'échappement produit par ledit brûleur à la combustion du combustible ;
un passage de drain (5) destiné à évacuer un drain produit lorsque de la vapeur d'eau contenue dans le gaz d'échappement est condensé dans ledit échangeur de chaleur (3, 4) ;
un passage de branchement (8) du passage d'eau (1) destiné à alimenter de l'eau de robinet, pour neutraliser le drain ;
une soupape de distribution (3a) destinée à ouvrir et fermer sélectivement le passage de branchement (8) ;
un moyen de commande de soupape de distribution (6) destiné à commander l'ouverture et la fermeture de ladite soupape de distribution (8a) lorsque le combustible est brûlé par ledit brûleur, **caractérisé par le fait que** le moyen de commande de soupape de distribution (6) comprend un moyen de mesure de la quantité de gaz brûlé (14) destiné à mesurer la quantité de gaz brûlé par ledit brûleur par unité de temps ; et un moyen de réglage de temps d'ouverture de soupape (16) destiné à régler un temps pendant lequel ladite soupape de distribution (8a) est ouverte, en fonction de la quantité de gaz brûlé par ledit brûleur qui est mesurée par ledit moyen de mesure de quantité de gaz brûlé (14) ; et
un contrôleur (6, 12, 15) destiné à contrôler la quantité de combustible alimentée vers le brûleur pour la combustion selon le débit d'eau de robinet dans le passage d'eau mesuré par un débitmètre (1b) ; et
une soupape à débit constant (8b) connectée audit passage de branchement (8) présentant un élément de soupape (24) destinée à régler le flux d'eau à travers la soupape selon la pression de l'eau de robinet, afin de maintenir un débit d'eau sensiblement constant dans ledit passage de branchement (8).

2. Appareil de combustion selon la revendication 1, dans lequel ledit moyen de commande de soupape de distribution (6) comprend par ailleurs :
un moyen de calcul (15) destiné à calculer une quantité de drain produit sur base de la quantité de gaz brûlé par ledit brûleur mesurée par ledit moyen de mesure de quantité de gaz brûlé (14), à calculer une quantité d'eau de robinet à mélanger au drain pour amener le pH du drain dans une plage de 5 à 9, sur base de la quantité calculée de drain produit, et à calculer un temps pendant lequel ladite soupape de distribution (8a) est ouverte, sur base de la quantité d'eau de robinet calculée.
